# FASCICULE DE BREVET EUROPEEN

(11) **EP 1 181 164 B1**
(45) Date de publication et mention de la délivrance du brevet: **21.06.2006**
(21) Numéro de dépôt: 01919594.0
(22) Date de dépôt: 29.03.2001
(51) Int. Cl.: B60J 10/00

(54) **NOUVEAU JOINT D'ETANCHEITE POUR ENCADREMENT D'OUVERTURE D'UNE CARROSSERIE DE VEHICULE AUTOMOBILE**
NEUE DICHTUNGSPROFILLEISTE FÜR ÖFFNUNGSRAHMEN VON KRAFTFAHRZEUG-KAROSSERIEN
AUTOMOBILE NOVEL SEALING JOINT FOR A MOTOR VEHICLE BODY OPENING FRAME

(30) Priorité: 31.03.2000 FR 0004114
(43) Date de publication de la demande: 27.02.2002
(73) Titulaire: Metzeler Automotive Profile Systems Transieres, 92000 Nanterre (FR)
(72) Inventeur: DRON, Bernard, F-92800 Puteaux (FR)
(74) Mandataire: Jolly, Jean-Pierre
(86) Numéro de dépôt international: PCT/FR2001/000950
(87) Numéro de publication internationale: WO 2001/074616

(56) Documents cités:
- EP-A- 0 613 800
- EP-A- 0 622 261
- WO-A-98/21061
- FR-A- 2 793 196

## Description

La présente invention concerne un joint d'étanchéité pour encadrement d'ouverture d'une carrosserie de véhicule automobile, notamment pour encadrement de coffre, hayon, custode, porte ou autre.

De tels joints pour encadrements comprennent généralement :
- un profilé formant pince à section en U, en élastomère ou en plastomère, comportant le plus souvent une armature rigide et destiné à coiffer et pincer une partie de l'encadrement de l'ouverture de la carrosserie de l'automobile, ou un moyen similaire de fixation sur cet encadrement ;
- et au moins un profilé tubulaire en un matériau déformable élastiquement, généralement un matériau cellulaire, attenant par exemple à une branche latérale ou à la base du profilé à section en U et faisant saillie vers l'extérieur à partir de l'encadrement de l'ouverture, en vue d'être comprimé entre l'ouvrant et l'encadrement, en position de fermeture de l'ouvrant, pour assurer l'étanchéité du véhicule.

Le profilé à section en U et le profilé tubulaire sont habituellement en des matériaux thermoplastiques ou élastomériques et sont réalisés par coextrusion.

Outre son rôle d'organe d'étanchéité, lorsqu'il est comprimé par l'ouvrant, en position de fermeture de celui-ci, le profilé tubulaire a aussi une fonction d'insonorisation de l'habitacle du véhicule.

De nombreuses formes de réalisation de tels joints sont connues dans la technique et toutes visent généralement à améliorer leurs propriétés insonorisantes, sans trop altérer l'aptitude à la déformation du profilé tubulaire.

Un joint d'étanchéité selon le préambule de la revendication 1 est par exemple connu du document EP 0 622 261.

La présente invention concerne des joints du même type général, mais qui, contrairement à ceux de la technique antérieure, qui visaient à avoir une excellente aptitude à la déformation, opposent ici localement une résistance accrue à la déformation, sous la sollicitation de l'ouvrant, lors de la fermeture de celui-ci.

En effet, lorsque des portes d'automobile sont fortement galbées, elles tendent à se déformer lorsque le véhicule roule à des vitesses élevées, sous l'effet d'une dépression externe, et il est important de pouvoir s'opposer à cette déformation. Avec un joint opposant une résistance accrue à la fermeture des portes, celles-ci, après fermeture, sont soumises à une précontrainte, qui leur permet de mieux résister aux sollicitations externes à grande vitesse du véhicule.

Par ailleurs, pour certains coffres de véhicule, il est parfois nécessaire que, lors de la fermeture de l'ouvrant, le joint de coffre lui oppose au moins localement une résistance suffisante pour servir d'amortisseur de fin de course, en évitant ainsi qu'il ne produise ultérieurement des vibrations.

L'invention concerne un joint d'étanchéité pour encadrement d'ouverture de véhicule automobile, qui répond aux exigences qui viennent d'être mentionnées.

A cet effet, l'invention a pour objet un joint d'étanchéité pour encadrement d'ouverture d'une carrosserie de véhicule automobile, ce joint comprenant un premier profilé formant pince à section en U, en élastomère ou en plastomère, apte à venir coiffer en la serrant une partie saillante de l'encadrement d'ouverture, et un second profilé à section en U, en un matériau déformable élastiquement, disposé latéralement par rapport au premier profilé, avec les extrémités de ses branches attenantes à l'une des ailes ou à la base de ce premier profilé, de manière à former avec cette aile un organe tubulaire, ce second profilé comprenant au moins un orifice qui met en communication l'intérieur et l'extérieur du profilé et étant destiné à être comprimé élastiquement par l'ouvrant associé à l'ouverture de la carrosserie, en position de fermeture de cet ouvrant, pour assurer l'étanchéité au niveau de l'encadrement, ce joint étant caractérisé en ce qu'à l'intérieur du second profilé et suivant une partie au moins de la longueur de celui-ci est logé un troisième profilé à section en U, de dimensions réduites par rapport à celles du second profilé et dont les extrémités des branches sont également attenantes à la même aile ou à la base du premier profilé, ce troisième profilé étant également en un matériau déformable élastiquement et étant destiné à opposer une résistance locale à l'effort de compression exercé par l'ouvrant, tout en renforçant l'étanchéité et l'insonorisation au niveau de l'encadrement de l'ouverture.

Comme le second profilé, le troisième profilé peut être percé d'au moins un orifice mettant en communication l'intérieur et l'extérieur du profilé. Il peut aussi être dépourvu d'un tel orifice, pour certaines applications du joint.

Le troisième profilé du joint conforme à l'invention a par conséquent une triple fonction :
- opposer une résistance accrue à la fermeture de l'ouvrant ;
- servir d'amortisseur en fin de course de cet ouvrant, lorsque celui-ci arrive en position de fermeture ;
- s'opposer au passage des ondes sonores et assurer ainsi une meilleure insonorisation de l'habitacle du véhicule, lorsqu'il est comprimé par l'ouvrant.

Suivant l'importance attachée par le constructeur d'automobile à l'une ou l'autre de ces fonctions, le troisième profilé pourra donc ne s'étendre que suivant une partie de la longueur du second profilé servant d'organe d'étanchéité ou suivant toute la longueur de celui-ci.

Afin d'améliorer les qualités insonorisantes de ce joint, le second profilé et/ou le troisième profilé peuvent être gainés localement d'au moins une pellicule souple en un matériau différent de celui dont ils sont constitués, ou en un matériau analogue, mais présentant des caractéristiques physiques différentes, cette ou ces pellicules ne s'étendant que suivant une partie de la section transversale et, éventuellement, de la longueur du profilé associé, comme décrit dans la demande de brevet français N° 00 01655, déposée le 10 Février 2000, non publiée à la date de dépôt de la présente demande.

Bien entendu, pour améliorer les propriétés d'étanchéité du joint conforme à l'invention, un profilé tubulaire additionnel, en un matériau déformable élastiquement et percé d'au moins un orifice mettant en communication l'intérieur et l'extérieur du profilé, peut être attenant de façon connue au second profilé, à l'extérieur de celui-ci, en une position telle qu'il soit lui aussi comprimé par l'ouvrant, en position de fermeture de celui-ci, et ce profilé tubulaire peut lui aussi être gainé localement d'un pellicule souple en un matériau différent de celui dont il est constitué, ou en un matériau analogue, mais présentant des propriétés physiques différentes.

D'autres caractéristiques et avantages du joint conforme à l'invention apparaîtront dans la description détaillée qui va suivre de certaines formes de réalisation de ce joint. Dans cette description, on se référera aux dessins schématiques annexés, sur lesquels :
La figure 1 est une coupe transversale d'une première forme de réalisation d'un joint conforme à l'invention ;
Les figures 2 et 3 sont des vues analogues à la figure 1 de deux autres formes de réalisation du joint selon l'invention.

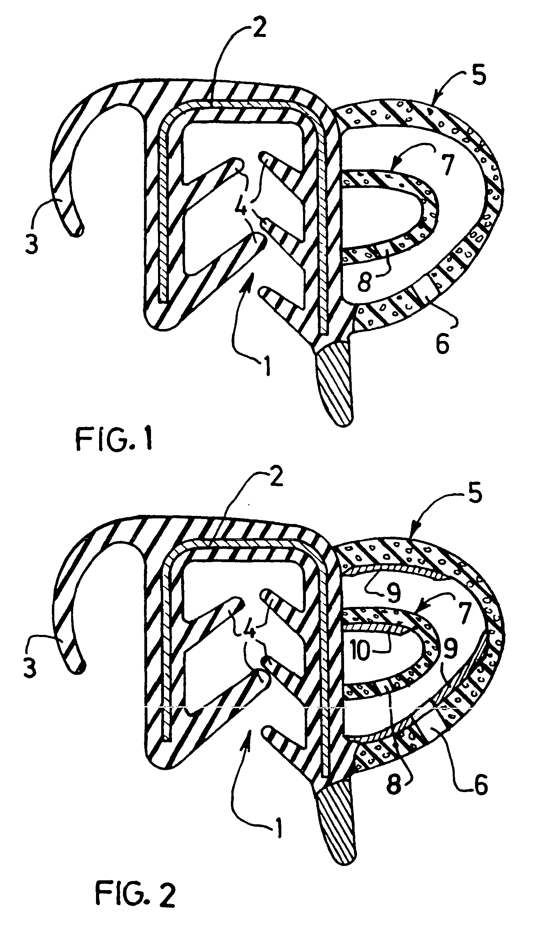

Le joint représenté sur la figure 1 comprend un profilé 1 formant pince, à section en U, en élastomère ou en plastomère, équipé d'une armature métallique 2, également à section en U, qui est destiné ici à coiffer un bord saillant d'un encadrement de porte d'automobile. Une lèvre cosmétique 3 fait saillie latéralement à partir de la base du U, tandis que des lèvres 4 en un matériau souple tel qu'un élastomère font saillie à l'intérieur du U à partir des branches de celui-ci, en vue d'enserrer fermement le bord saillant de l'encadrement de porte.

Un second profilé 5 à section en U, par exemple en caoutchouc cellulaire, incliné sensiblement à 90° par rapport au profilé 1, est attenant latéralement par les extrémités de ses branches à une aile de ce profilé 1 et il fait saillie vers l'extérieur du véhicule du côté opposé à la lèvre 3 en formant un organe tubulaire avec l'aile du profilé 1 à laquelle il est attenant. Ce profilé 5 est destiné à être comprimé et déformé entre l'encadrement de porte et cette porte, en position de fermeture de celle-ci, en vue d'assurer l'étanchéité de l'habitacle du véhicule et de l'insonoriser, et il peut être percé d'orifices 6, disposés à intervalles réguliers ou non le long du profilé, pour permettre le libre passage de l'air vers l'extérieur du profilé ou vers l'intérieur de celui-ci.

Ce joint peut être réalisé par une unique opération de coextrusion des profilés 1 et 5.

Conformément à l'invention, à l'intérieur du profilé 5 est logé un troisième profilé 7 à section en U, de plus petites dimensions, qui est attenant latéralement par l'extrémité de ses branches à la même aile du profilé 8 que le profilé 5. Le profilé 7 a une forme sensiblement analogue à celle du profilé 5 et sa surface externe est ici à une distance sensiblement constante de la surface interne du profilé 5. Il forme avec l'aile du profilé 1 à laquelle il est attenant un organe tubulaire de section notablement inférieure à celle du profilé 5.

Le profilé 7 est ici en la même matière que le profilé 5 et venu de coextrusion avec celui-ci et le profilé 1. Il est lui aussi destiné à être comprimé et déformé sous la sollicitation de la porte, en position de fermeture de celle-ci. Dans ce but, comme représenté sur le dessin, sa paroi peut être percée d'au moins un orifice 8, mettant en communication l'intérieur et l'extérieur du profilé, mais il peut être aussi dépourvu d'un tel orifice.

Comme exposé ci-dessus, selon le but recherché, le profilé 7 peut s'étendre suivant toute la longueur du profilé 5 ou suivant une partie seulement de celui-ci. La porte ne vient le comprimer qu'à la fin de son mouvement de fermeture et ii lui oppose une résistance locale, à la manière d'un amortisseur, tout en assurant une meilleure étanchéité du joint et une meilleure insonorisation de l'habitacle du véhicule.

Dans la forme de réalisation de la figure 2, où les organes déjà décrits sont désignés par les mêmes chiffres de référence, les profilés 5 et 7 sont revêtus localement, sur leur surface interne, de pellicules 9 et 10 en un matériau différent de celui du profilé ou en un matériau analogue, mais présentant des caractéristiques physiques différentes, notamment une masse spécifique différente. Ces pellicules 9 et 10, destinées à former des barrières au passage des ondes sonores, ne s'étendent que suivant une partie de la section transversale et éventuellement de la longueur des profilés 7, de manière à ne perturber que localement et de façon minime l'aptitude à la déformation de ceux-ci.

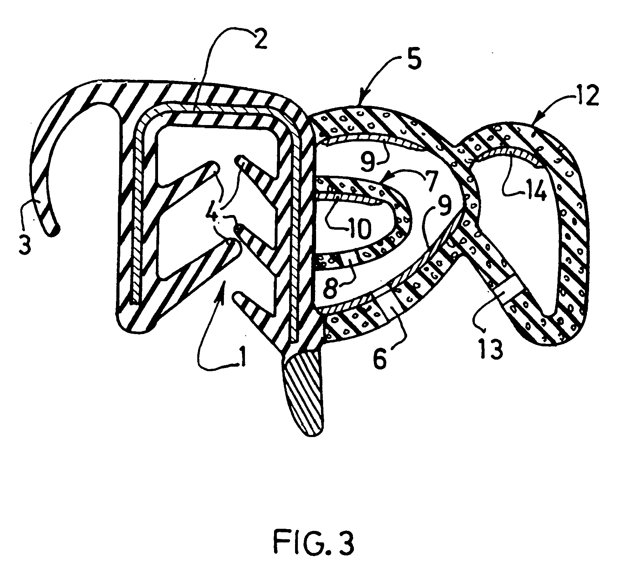

Dans la forme de réalisation de la figure 3, où les organes déjà décrits sont à nouveau désignés par les mêmes chiffres de référence, un profilé tubulaire 12, ici en le même matériau que celui du profilé 5 et communiquant avec l'extérieur par des orifices 13, est attenant à ce profilé 5.

Pour améliorer l'effet insonorisant de ce profilé 12, venu lui aussi de coextrusion avec les profilés 1, 5 et 7, sa surface interne est gainée localement par une pellicule 14 en un matériau différent de celui dont il est constitué ou analogue à celui-ci, mais ayant des caractéristiques physiques différentes, qui ne s'étend que suivant une partie de la section transversale et éventuellement de la longueur de ce profilé.

Dans toutes ces formes de réalisation, on notera la grande simplicité du joint d'étanchéité conforme à l'invention, qui peut être fabriqué par coextrusion de tous ses constituants, à l'exception de l'armature métallique, par des procédés bien connus de l'homme du métier.

## Revendications

1. Joint d'étanchéité pour encadrement d'ouverture d'une carrosserie de véhicule automobile, ce joint comprenant un premier profilé (1) formant pince à section en U, en élastomère ou en plastomère, apte à venir coiffer en la serrant une partie saillante de l'encadrement d'ouverture, et un second profilé (5) à section en U, en un matériau déformable élastiquement, disposé latéralement par rapport au premier profilé (1), avec les extrémités de ses branches attenantes à l'une des ailes ou à la base de ce premier profilé, de manière à former avec cette aile un organe tubulaire, ce second profilé comprenant au moins un orifice (6) mettant en communication l'intérieur et l'extérieur du profilé et étant destiné à être comprimé élastiquement par l'ouvrant associé à l'ouverture de la carrosserie, en position de fermeture de cet ouvrant, pour assurer l'étanchéité au niveau de l'encadrement, ce joint étant **caractérisé en ce qu'**à l'intérieur du second profilé (5) et suivant une partie au moins de la longueur de celui-ci est logé un troisième profilé (7) à section en U, de dimensions réduites par rapport à celles du second profilé (5) et dont les extrémités des branches sont également attenantes à la même aile ou à la base du premier profilé (1), ce troisième profilé (7) étant également en un matériau déformable élastiquement et étant destiné à opposer une résistance locale à l'effort de compression exercé par l'ouvrant, tout en renforçant l'étanchéité et l'insonorisation au niveau de l'encadrement de l'ouverture.

2. Joint selon la revendication 1, **caractérisé en ce que** le troisième profilé (7) est percé d'au moins un orifice (8) mettant en communication l'intérieur et l'extérieur de ce profilé.

3. Joint selon l'une des revendications 1 et 2, **caractérisé en ce que** le second et/ou le troisième profilés (5, 7) sont gainés localement, sur leur surface externe et/ou interne, d'au moins une pellicule (11) en un matériau différent de celui dont ils sont constitués, ou en le même matériau, mais possédant des propriétés physiques différentes, cette pellicule ne s'étendant que suivant une partie de la section transversale et éventuellement de la longueur du profilé associé.

4. Joint selon l'une des revendications 1 à 3, **caractérisé en ce qu'**un profilé tubulaire (12) en un matériau déformable élastiquement est attenant extérieurement de façon connue au second profilé (5) dans une position telle qu'il puisse être comprimé et déformé par l'ouvrant, en position de fermeture de celui-ci, ce profilé (12) comportant au moins un orifice (13) qui met en communication l'intérieur et l'extérieur du profilé.

5. Profilé selon la revendication 4, **caractérisé en, ce que** ledit profilé tubulaire (12) attenant extérieurement de façon connue au second profilé (5) est gainé localement, sur sa surface externe et/ou interne, d'au moins une pellicule (14) en un matériau différent de celui dont il est constitué, ou en le même matériau, mais possédant des propriétés physiques différentes, cette pellicule ne s'étendant que suivant une partie de la section transversale et éventuellement de la longueur de ce profilé (12).

6. Profilé selon l'une des revendications 1 à 5, **caractérisé en ce que** le profilé formant pince (1), le second profilé (5), le troisième profilé (7), le profilé tubulaire 12) attenant extérieurement de façon connue au second profilé (5) et les pellicules (9,10,14) associées sont venus de coextrusion.

## Claims

1. Seal for the surround of an opening in motor vehicle bodywork, this seal comprising a first section piece (1) forming a clip of U-shaped cross section, made of elastomer or of plastomer, capable of sitting over and gripping a projecting part of the surround of the opening, and a second section piece (5) of U-shaped cross section, made of an elastically deformable material, arranged to the side of the first section piece (1), with the ends of its branches abutting one of the flanges or the base of this first section piece, so as to form, with this flange, a tubular member, this second section piece comprising at least one orifice (6) placing the inside of the section piece in communication with the outside and intended to be elastically compressed by the opening leaf associated with the opening in the bodywork, when this opening leaf is in the closed position, so as to seal at the surround, this seal being **characterized in that**, housed inside the second section piece (5) and along at least part of its length, is a third section piece (7) with a U-shaped cross section, which is smaller in size than the second section piece (5) and the ends of the branches of which also abut the same flange or the base of the first section piece (1), this third section piece (7) also being made of an elastically deformable material and intended to put up local resistance to the compressive force exerted by the opening leaf, while at the same time improving the sealing and soundproofing at the surround of the opening.

2. Seal according to Claim 1, **characterized in that** the third section piece (7) is pierced with at least one orifice (8) placing the inside of this section piece in communication with its outside.

3. Seal according to either of Claims 1 and 2, **characterized in that** the second and/or third section pieces (5, 7) are locally sheathed, on their outer and/or inner surfaces, with at least one film (11) made of a material different from the one of which they are made, or of the same material, but having different physical properties, this film extending only over part of the cross section and possibly over part of the length of the associated section piece.

4. Seal according to one of Claims 1 to 3, **characterized in that** a tubular section piece (12) made of an elastically deformable material externally abuts the second section piece (5) in a known way in a position such that it can be compressed and deformed by the opening leaf, when the latter is in the closed position, this section piece (12) comprising at least one orifice (13) which places the inside of the section piece in communication with its outside.

5. Section piece according to Claim 4, **characterized in that** said tubular section piece (12) externally abutting the second section piece (5) in a known way is locally sheathed, on its outer and/or inner surface, with at least one film (14) made of a material different from the one of which it is made, or of the same material, but having different physical properties, this film extending only over part of the cross section and possibly over part of the length of this section piece (12).

6. Section piece according to one of Claims 1 to 5, **characterized in that** the section piece forming the clip (1), the second section piece (5), the third section piece (7), the tubular section piece (12) externally abutting the second section piece (5) in a known way and the associated films (9, 10, 14) are formed by coextrusion.

## Patentansprüche

1. Dichtung für eine Offnungsumrandung einer Kraftfahrzeug-Karosserie, wobei die Dichtung ein U-förmiges Klemmteil bildendes erstes Profil (1) aus Elastomer oder aus Plastomer umfasst, das geeignet ist, unter Festklemmen an einem vorspringenden Teil der Öffnungsumrandung diesen zu überdecken, und ein zweites U-förmiges Profil (5) aus einem elastisch verformbaren Material, das bezogen auf das erste Profil (1) seitlich angeordnet ist, wobei die Enden seiner Arme an einen der Schenkel oder an die Basis dieses ersten Profils derart anstoßen, dass mit diesem Schenkel ein rohrförmiges Organ gebildet wird, wobei das zweite Profil wenigstens eine die Kommunikation zwischen dem Innenraum und dem Außenraum des Profils herstellende Öffnung (6) aufweist und zur Sicherstellung der Dichtigkeit auf Umrandungsebene durch den mit der Karosserieöffnung verbundenen Öffner in dessen Schließposition elastisch komprimierbar ist, wobei die Dichtung **dadurch gekennzeichnet ist, dass** im Inneren des zweiten Profils (5) und entlang wenigstens eines Teils seiner Länge ein drittes U-förmiges Profil (7) angeordnet ist, dessen Abmessungen bezogen auf jene des zweiten Profils (5) reduziert sind und dessen Armenden ebenfalls an denselben Schenkel oder an die Basis des ersten Profils (1) anstoßen, wobei dieses dritte Profil (7) ebenfalls aus einem elastisch verformbaren Material besteht und dafür ausgelegt ist, einem örtlichen Widerstand gegen die durch den Öffner ausgeübte Kompressionskraft entgegen zu wirken und dabei gleichzeitig die Dichtigkeit und Schalldämmung auf der Ebene der Öffnungsumrandung zu verstärken.

2. Dichtung nach Anspruch 1, **dadurch gekennzeichnet, dass** das dritte Profil (7) von mindestens einer Öffnung (8) durchbrochen ist, die die Kommunikation zwischen dem Innenraum und dem Außenraum dieses Profils herstellt.

3. Dichtung nach einem der Ansprüche 1 und 2, **dadurch gekennzeichnet, dass** das zweite und/oder das dritte Profil (5, 7) an ihrer Außenfläche und/oder Innenfläche örtlich mit zumindest einer Haut (11) umhüllt sind, die aus einem anderen Material als dem des Profils oder aus dem gleichen Material besteht, jedoch andere physikalische Eigenschaften besitzt, wobei sich diese Haut nur entlang eines Teils des Querschnitts und gegebenenfalls der Länge des damit verbundenen Profils erstreckt.

4. Dichtung nach einem der Ansprüche 1 bis 3, **dadurch gekennzeichnet, dass** ein rohrförmiges Profil (12) aus einem elastisch verformbaren Material in bekannter Weise außen an das zweite Profil (5) in einer derartigen Position anstößt, dass es in der Schließposition des Öffners durch den Öffner komprimiert und verformt werden kann, wobei das Profil (12) wenigstens eine Öffnung (13) aufweist, die die Kommunikation zwischen dem Innenraum und dem Außenraum des Profils herstellt.

5. Profil nach Anspruch 4, **dadurch gekennzeichnet, dass** das in bekannter Weise außen an das zweite Profil (5) anstoßende rohrförmige Profil (12) an seiner Außenfläche und/oder Innenfläche mit wenigstens einer Haut (14) umhüllt ist, die aus einem anderen Material als dem des Profils oder aus dem gleichen Material besteht, jedoch andere physikalische Eigenschaften besitzt, wobei sich diese Haut nur entlang eines Teils des Querschnitts und gegebenenfalls der Länge dieses Profils (12) erstreckt.

6. Profil nach einem der Ansprüche 1 bis 5, **dadurch gekennzeichnet, dass** das ein Klemmteil bildende Profil (1), das zweite Profil (5), das dritte Profil (7), das in bekannter Weise außen an das zweite Profil (5) anstoßende rohrförmige Profil (12) und die damit verbundenen Häute (9, 10, 14) koextrudiert sind.
